# EUROPEAN PATENT SPECIFICATION

(11) **EP 2 721 302 B1**
(45) Date of publication and mention of the grant of the patent: **21.11.2018**
(21) Application number: 12800249.0
(22) Date of filing: 31.05.2012
(51) Int. Cl.: F04D 15/00, E03F 5/22, F04D 15/02, F04D 13/08, F04B 23/04, G05B 13/02

(54) **METHOD FOR AUTOMATIC MUTUAL ALTERNATION BETWEEN AN ARBITRARY NUMBER OF PUMPS**
VERFAHREN ZUM AUTOMATISCHEN GEGENSEITIGEN WECHSEL EINER BELIEBIGEN ANZAHL VON PUMPEN
PROCÉDÉ D'ALTERNANCE MUTUELLE AUTOMATIQUE D'UN NOMBRE ARBITRAIRE DE POMPES

(30) Priority: 16.06.2011 SE 1150547
(43) Date of publication of application: 23.04.2014
(73) Proprietor: Xylem IP Holdings LLC, Rye Brook, NY 10573 (US)
(72) Inventor: LARSSON, Martin, S-174 48 Sundbyberg (SE); FULLEMANN, Alexander, S-117 27 Stockholm (SE)
(74) Representative: Brann AB
(86) International application number: PCT/SE2012/050579
(87) International publication number: WO 2012/173551

(56) References cited:
- EP-A1- 1 256 724
- DE-A1- 19 927 365
- DE-A1- 19 927 365
- JP-A- 2005 240 623
- US-A1- 2004 071 554
- US-B2- 7 195 462
- 'User manual GSP201 En ITT Water & Wastewater' RANDOM START LEVEL 15 October 2008, page 61
- THOMAS THUNBERG: 'Compact Pump V5.0.2-0' MANUAL ABB AB:THOMAS THUNBERG 23 September 2009, page 17, XP008174114
- ITT Flygt: "Passage from Manual - GSP 201 Sv", Anvandarmanual, 1 January 2007 (2007-01-01), pages 62-63, XP055411100, Retrieved from the Internet: URL:www.flygt.be/common/vfs/24905/GSP201_M anual_Sv.pdf [retrieved on 2017-09-28]

## Description

### Technical Field of the Invention

The present invention relates generally to a method for controlling an arbitrary number of pumps. In particular, the present invention relates to a method for automatic mutual alternation between an arbitrary number of pumps by the control of an individual pump, which makes use of a start condition for a state change from an inactive state of the pump into an active state of the pump to be performed, as well as makes use of a stop condition for a state change from said active state into said inactive state to be performed.

### Background of the Invention and Prior Art

Traditional fundamental control of a pump station comprising one or more pumps is based on a pump being activated when a start condition is satisfied and is switched off when a stop condition is satisfied. Usually, there is a level instrument arrangement that detects when a pump start liquid level in the sump of the pump station is reached as well as when a pump stop liquid level is reached. According to law and custom, pump stations are almost always equipped with at least two pumps arranged in parallel, where a secondary pump just is a security in case the primary pump breaks or if the inflow to the pump station for the moment is unusually high.

Some manufacturers/users only use the primary pump in normal pumping, but this gives a large wear of the primary pump at the same time as the disposal of faultless function of the secondary pump is uncertain when the same is indeed needed. On the contrary, it is more common to alternate between the primary pump and the secondary pump when emptying of the sump is required.

A simple way of alternation, in view of control, includes that the pumps are active every second time, another way of alternation is to let them be active equally long as measured over a certain time, a third way to alternate the activation of the pumps is to let the pumps be active, for instance, every second day. However, all of said ways of alternation require that the control unit of the pump station, or the respective control unit of the pumps, has knowledge about the number of pumps that are arranged in the pump station and/or that communication takes place between the pumps.

One way to try to avoid communication between the pumps is shown in US 7,195,462, wherein each one of several pumps of one and the same pump station has at least two predefined pump start liquid levels, and wherein the pump that was active most recently assumes the higher pump start liquid level and the other pumps keep the lower pump start liquid level, with the purpose of one of the most recently inactive pumps instead of the most recently active pump being to be activated the next time the liquid level in the sump rises sufficiently high. However, this publication shows that each pump has to be aware of how many other pumps being arranged in the sump.

EP 1 256 724 A1 discloses a method according to the preamble of claim 1, wherein a starting time delay is randomly chosen for each pump.

Common to the previously known solutions is that, at least as regards waste water applications, a considerable tidal mark of grease and dirt will be built up at the fixed pump start liquid level, which is not desirable.

### Brief Description of the Objects of the Invention

The present invention aims at obviating the above-mentioned disadvantages and failings of previously known methods and at providing an improved method for controlling a pump. A primary object of the invention is to provide an improved method of the initially defined type, which results in that alternation of the active pump will take place without the need of neither direct nor indirect communication between the pumps.

Another object of the present invention is to provide a method that results in that the individual pump does not need to know if or how many other pumps that are installed in the sump.

Another object of the present invention is to provide a method that results in that building up of a tidal mark of grease and dirt on the inside of the sump is prevented.

### Brief Description of the Features of the Invention

According to the invention, at least the primary object is achieved by the method defined in appended claim 1.

Accordingly, the present invention is based on the understanding that, by, for several independent pumps, randomly/arbitrarily changing the respective start condition of the pumps, an alternation of the activation of the pumps will take place, since they over time randomly will obtain start conditions corresponding to the lowest pump start liquid level in an alternating way.

Preferred embodiments of the present invention are furthermore defined in the depending claims.

According to the invention, the step of arbitrarily changing the start condition of the pump comprises the step of determining a pump start liquid level hₛₜₐᵣₜ, which is arbitrarily changed within an interval having predetermined limits. This interval is preferably limited by and comprises a lower pump start liquid level h_{start,min} and an upper pump start liquid level h_{start,max}. This arrangement is preferred in those pump stations that comprise so-called dynamic level instruments that dynamically can determine the liquid level in the sump.

In a preferred embodiment, the step of arbitrarily changing the start condition of the pump also comprises the step of determining a start time delay t_{delay} of the pump, which start time delay preferably is changed within an interval, which is limited by and which comprises a lower limit that is equal to 0 and an upper limit t_{delay,max}.

Additional advantages and features of the invention are seen in the other dependent claims as well as in the following, detailed description of preferred embodiments.

### Brief Description of the Drawings

A more complete understanding of the above-mentioned and other features and advantages of the present invention will be clear from the following, detailed description of preferred embodiments, reference being made to the accompanying drawings, wherein:
- Fig. 1: is a schematic illustration of a pump station,
- Fig. 2: is a flow chart showing a first embodiment of the method according to the invention,
- Fig. 3: is a flow chart showing a second embodiment of the method according to the invention,
- Fig. 4: is a flow chart showing a third embodiment of the method according to the invention,
- Fig. 5: is a flow chart showing a fourth embodiment of the method according to the invention,
- Fig. 6: is a flow chart showing a first embodiment of the sub method "Find start condition", and
- Fig. 7: is a flow chart showing a second embodiment of the sub method "Find start condition".

### Detailed Description of Preferred Embodiments

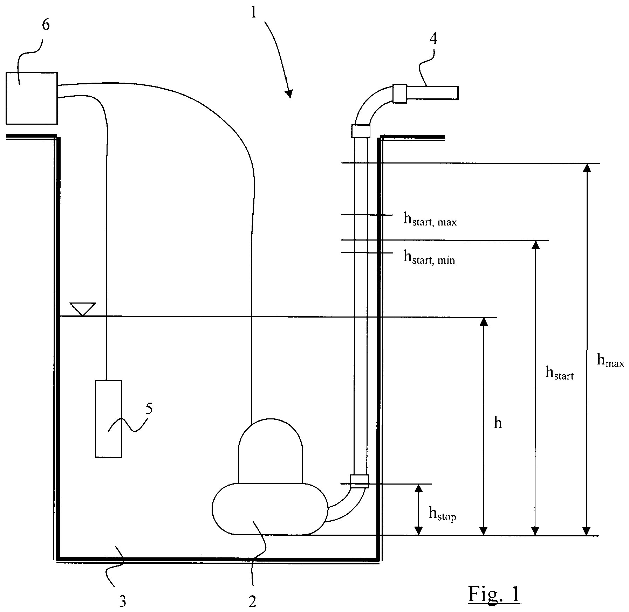

In Figure 1, a pump station is shown, generally designated 1, comprising at least one pump 2, which is arranged to pump liquid from a sump 3 included in the pump station 1 to an outlet pipe 4 and further away from the pump station 1. Further, the pump station 1 comprises at least one level instrument 5 arranged to determine the pump station liquid level h; it should be pointed out that the level instrument 5 may be an individual device that is operatively connected to an external control unit 6, be operatively connected to said at least one pump 2, be built-in in said at least one pump 2, etc. Said at least one pump 2 is preferably operatively connected to the external control unit 6 with the purpose of, for instance, allowing regulation of the pump speed, alternatively the pump 2 comprises a built-in control unit (not shown). It should be pointed out that the present invention is aimed at a method, generally designated 7, for controlling an arbitrary number of pumps.

Said pump 2 makes use of a start condition for a state change from an inactive state of the pump into an active state of the pump to be performed, as well as makes use of a stop condition for a state change from said active state into said inactive state to be performed. With the expression "makes use of", as used in the claims as well as in the detailed description, it is intended that the start conditions and the stop conditions, for instance, reside in said external control unit 6 and that the same produces state change of the pump 2, alternatively, the start conditions and the stop conditions may, for instance, reside in a control unit in the pump 2, or the like.

The pump station 1 has a pump station liquid level, which is designated h and which in the present patent application is the distance between the liquid level in the sump 3 and the inlet of the pump 2 (see Figure 1), the pump station liquid level h is also coupled to the real lifting height of the pump 2, which increases with falling pump station liquid level h. When the sump 3 is refilled with liquid, the pump station liquid level h rises, and when the pump 2 is active and pumps out liquid, the pump station liquid level h falls. It should be pointed out that the sump 3 can be refilled with liquid at the same time as the pump 2 is active and pumps out liquid.

The stop condition for a pump 2 is usually a pump stop liquid level hₛₜₒₚ that corresponds to a liquid level in the sump 3 where the pump 2 is snooring, i.e., pumps a mixture of air and liquid, or is a predetermined lowest pump stop liquid level hₛₜₒₚ that corresponds to a liquid level in the sump that is sufficiently high to guarantee that snooring does not occur. Usually, the stop conditions of the pump 2 are unchanged over time.

According to the present invention, the start condition for the pump 2 is randomly changed within predetermined limits. The start condition of the pump 2 consists of a pump start liquid level hₛₜₐᵣₜ that preferably corresponds to a liquid level in the sump 3 that is positioned with a margin at a distance from the liquid level in the sump 3 when the pump station 1 is flooded.

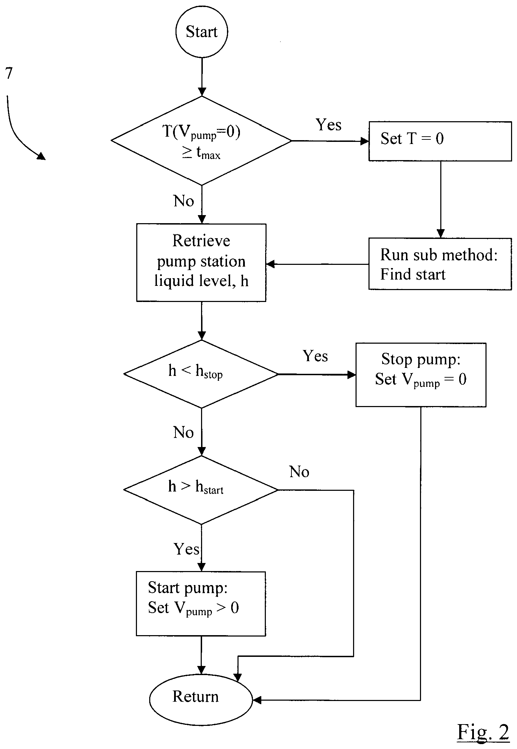

In Figures 2-5, there are shown preferred embodiments of the method 7 according to the invention for controlling a pump 2. It should be pointed out that the method 7 according to the invention may be expanded, within the scope of the claims, using one or more sub methods, and/or be run in parallel/sequentially with other control methods. The method 7 according to the invention comprises a sub method, designated "Find start condition", which serves the purpose of randomly changing the start condition of the pump 2 within predetermined limits. The object of said sub method is to periodically change the start condition of the specific pump 2 in such a way that, in case there are several pumps arranged in one and the same sump 3, i.e., are connected to one and the same liquid volume, an alternation of the activation of the pumps will take place automatically without any pump needing to know whether additional pumps are arranged in the same sump 3.

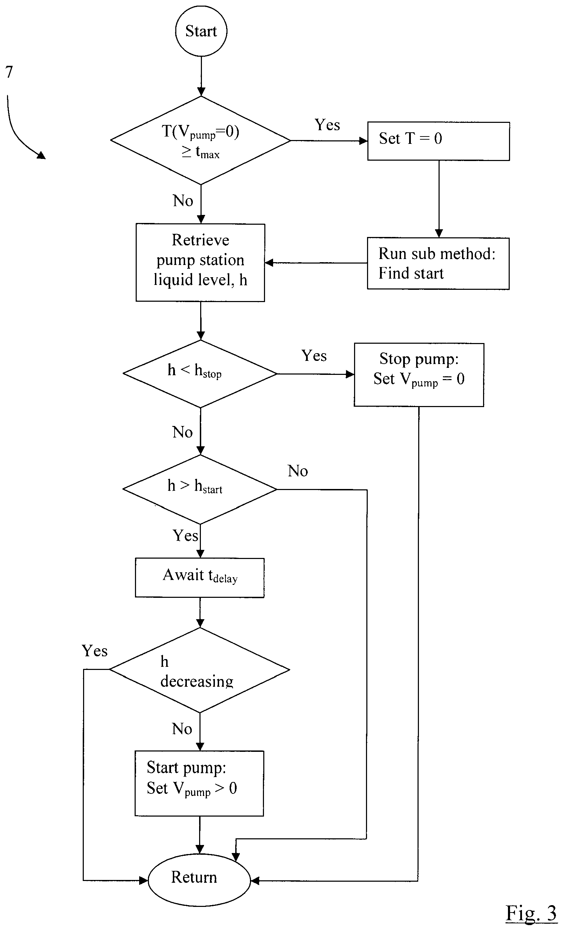

Reference is now made to Figures 2 and 3. The method 7 starts and then a check is made if a certain stage has elapsed. Said stage consists preferably of an operating period, which preferably has the length 24 h or a multiple of 24 h, alternatively said stage may consist of a number of pump cycles, i.e., how many times the liquid level in the sump 3 has fallen or how many times the specific pump has been active, alternatively said stage may consist of a maximum time tₘₐₓ that the specific pump has been inactive, or another suitable measurable course of events. In Figure 2, this check step is illustrated by means of whether the condition T(Vₚᵤₘₚ=0)≥tₘₐₓ is satisfied, wherein T(Vₚᵤₘₚ=0) is elapsed time during which the individual pump speed Vₚᵤₘₚ of the pump 2 has been equal to zero, i.e., how long the pump has been inactive. However, it should be realized that also the other above-mentioned and other similar check step alternatives are included in the check step shown in Figures 2 and 3 and handles whether a stage has elapsed.

In the case of checking of completed operating period, the measurement of elapsed time T of the operating period in progress is set to zero in connection with an operating period being completed and another one being initiated. It should be pointed out that T may also be actual, or absolute, time, and then the relationship between actual time and a multiple of the operating period is checked instead, i.e., for instance every time the actual time strikes 00:00, a new operating period starts. Also in the case when checking of how long the specific pump has been inactive, the measurement of elapsed time T is set to zero, and then the measurement of elapsed time T starts once again when the individual pump next time is stopped and the pump speed Vₚᵤₘₚ is set equal to zero. In the case when checking of a number of elapsed pump cycles or the like is made, this counter is set to zero correspondingly.

After an affirmative check whether a certain stage has elapsed, and in connection with possible resetting of the appropriate counter/clock, the method 7 proceeds to a sub method designated "Find start condition", which aims at determining the next start condition for the specific pump 2. The sub method "Find start condition" will be described more in detail below after the overall method 7 has been described.

After the sub method "Find start condition", alternatively after a negative check whether a certain stage has elapsed, the method 7 continues to the next method step, which is "Retrieve pump station liquid level, h".

The pump station liquid level h is determined by means of some form of customary level instrument arrangement, which may comprise one or more co-operating level instruments 5, which may be static or dynamic. Static level instruments may also be called discrete, fixed, etc. Static level instruments, such as a conventional tiltable level instrument, checks if a predetermined liquid level has been attained. Dynamic level instruments may also be called continuous, analog, etc. Dynamic level instruments, such as an acoustic level instrument being immersed or sound echo or light reflection level instruments suspended above, can, unlike static level instruments, continuously check the instantaneous liquid level in the sump 3.

When the pump station liquid level h has been retrieved, a check is made if the pump station liquid level h in the sump 3 is lower than the liquid level that corresponds to a pump stop liquid level hₛₜₒₚ, i.e., whether the condition h<hₛₜₒₚ is satisfied. If the condition h<hₛₜₒₚ is satisfied, the pump speed Vₚᵤₘₚ is set equal to zero and the possibly active pump 2 is switched off, and the method 7 is terminated and returns to start. If the condition h<hₛₜₒₚ is not satisfied, it is then checked if the liquid level in the sump 3 is higher than the liquid level that corresponds to a pump start liquid level hₛₜₐᵣₜ, i.e., whether the condition h>hₛₜₐᵣₜ is satisfied. If the condition h>hₛₜₐᵣₜ is satisfied, the pump 2 is activated at a pump speed Vₚᵤₘₚ that is greater than zero, selected pump speed may be optimized in a suitable way. If the condition h>hₛₜₐᵣₜ is not satisfied, alternatively after the pump 2 has been activated, the method 7 is terminated and returns to start according to the preferred embodiment according to Figure 2. In the embodiment according to Figure 2, the start condition of the pump consists of hₛₜₐᵣₜ.

According to the embodiment shown in Figure 3, the start condition of the pump consists a pump start liquid level hₛₜₐᵣₜ as well as a time delay t_{delay} that is a delay between when the liquid level in the sump 3 reaches the pump start liquid level hₛₜₐᵣₜ and a check whether the pump station liquid level h falls/decreases is carried out. Similar to the embodiment according to Figure 2, the method 7 is terminated and returns to start if the condition h>hₛₜₐᵣₜ is not satisfied, but in case the condition h>hₛₜₐᵣₜ is satisfied, the method 7 proceeds instead into a pause method step and awaits the time t_{delay}, after that a check is made if the pump station liquid level h in the sump 3 falls/decreases. If the pump station liquid level h falls, it shows that one or more other pumps are active and pump out liquid from the common liquid volume. Accordingly, these other pumps have been activated while the specific pump 2 has awaited the time t_{delay}. The method 7 is terminated and returns to start. If the pump station liquid level h does not fall/decrease, the specific pump 2 is activated at a pump speed Vₚᵤₘₚ that is greater than zero, after which the method 7 is terminated and returns to start. It should be pointed out that the steps of checking the conditions h<hₛₜₒₚ and h>hₛₜₐᵣₜ, together with the respective associated subsequent method step, can interchange place without the method in other respects, or the present invention, being affected.

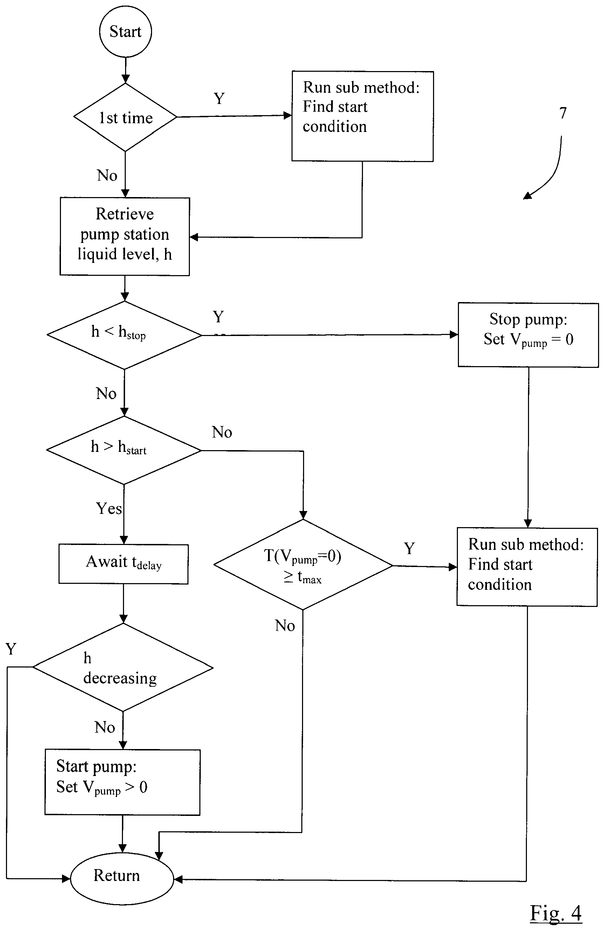

Reference is now made to Figure 4 that shows a third embodiment of the present method 7. The method 7 starts and then a check is made if a certain stage has elapsed. In this embodiment, said stage consists of whether it is the first time the method 7 is executed, for instance after the pump 2 was energized or after the method 7 was restarted.

After an affirmative check whether a certain stage has elapsed, the method 7 proceeds to the sub method "Find start condition", which aims at finding next start condition for the individual pump 2. After the sub method "Find start condition", alternatively after a negative check whether a certain stage has elapsed, the method 7 continues to the next method step "Retrieve pump station liquid level, h" as described above in the context of Figures 2 and 3.

When the pump station liquid level h has been retrieved, a check is made if the pump station liquid level h in the sump 3 is lower than the pump stop liquid level hₛₜₒₚ, i.e., whether the condition h<hₛₜₒₚ is satisfied. If the condition h<hₛₜₒₚ is satisfied, the pump speed Vₚᵤₘₚ is set equal to zero and the possibly active pump 2 is switched off, then the method 7 proceeds to the sub method "Find start condition", whereupon the method 7 is terminated and returns to start. If the condition h<hₛₜₒₚ is not satisfied, a check is made if the liquid level in the sump 3 is higher than the pump start liquid level hₛₜₐᵣₜ, i.e., whether the condition h>hₛₜₐᵣₜ is satisfied.

If the condition h>hₛₜₐᵣₜ is satisfied, the method 7 proceeds into a pause method step and awaits the time t_{delay}, then a check is made if the pump station liquid level h in the sump 3 falls/decreases, after which the method 7 is terminated and returns to start in case the pump station liquid level h in the sump 3 decreases/falls as described above in the context of Figure 3. If the pump station liquid level h does not fall/decrease, the specific pump 2 is activated at a pump speed Vₚᵤₘₚ that is greater than zero, after which the method 7 is terminated and returns to start.

If the condition h>hₛₜₐᵣₜ is not satisfied, the check that initially was executed in the embodiments according to Figures 2 and 3, i.e., whether a certain stage has elapsed, is made. After an affirmative check, the method 7 proceeds to the sub method "Find start condition", whereupon the method 7 is terminated and returns to start. After a negative check, the method 7 is terminated directly and returns to start.

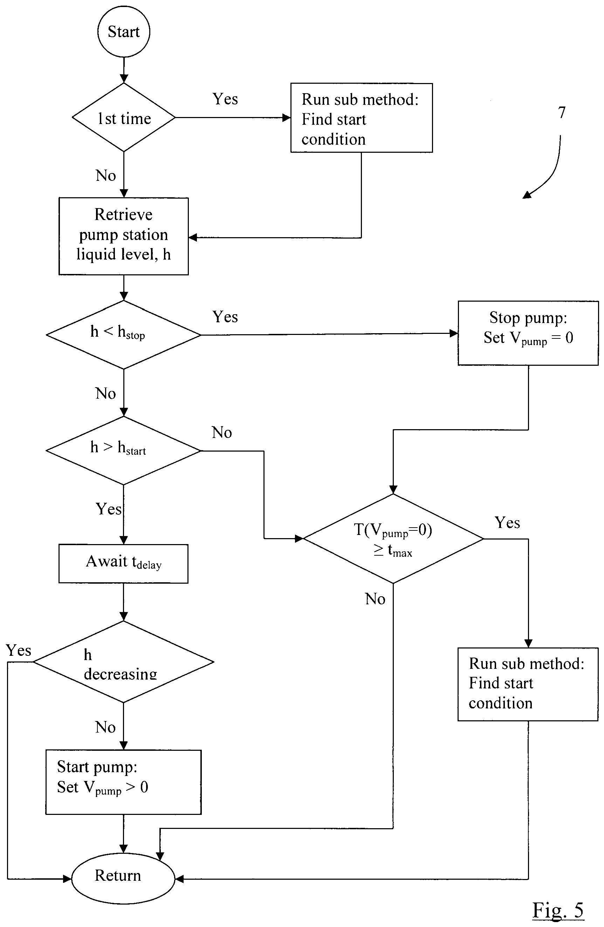

According to a fourth embodiment according to Figure 5, which is an alternative embodiment of the third embodiment shown in Figure 4, the method 7 proceeds, after the condition h<hₛₜₒₚ has been checked and the pump speed Vₚᵤₘₚ been set equal to zero, to made the initial check in the embodiments according to Figures 2 and 3, i.e., whether a certain stage has elapsed, instead of performing the sub method "Find start condition". It should be pointed out that the embodiments according to Figures 4 and 5 may, after an affirmative check of the condition h>hₛₜₐᵣₜ, be changed like the embodiment according to Figure 2, i.e., that the method steps await t_{delay} and check whether the pump station liquid level h decreases are removed.

It should be pointed out that if the individual pump is active but the liquid level in the sump 3 does not fall/decrease but instead increases, other pumps will be activated when their respective pump start liquid levels hₛₜₐᵣₜ are reached. If this does not help, the pump station 1 may be provided with a maximally allowed pump station liquid level hₘₐₓ, on which the speed of one or more pumps is raised with the purpose of preventing the pump station 1 from being flooded.

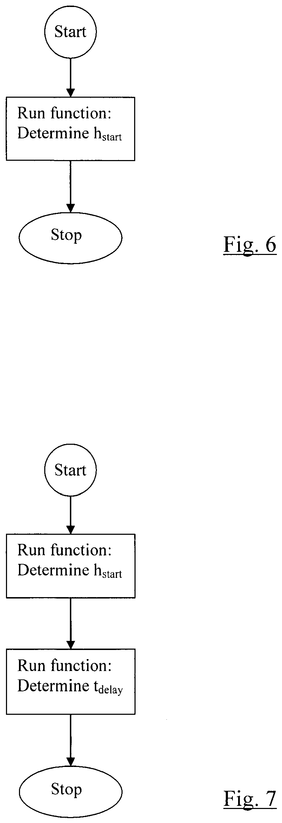

In Figure 6, a first embodiment of the sub method "Find start condition" is shown, and in Figure 7, a second embodiment of the sub method "Find start condition" is shown.

Common to the shown sub methods "Find start condition" is that after start, a first sub method step "Run function: Determine hₛₜₐᵣₜ" is carried out, which means determination of a value of the pump start liquid level hₛₜₐᵣₜ, i.e., on which liquid level in the sump 3 the specific pump 2 should be activated. The value of the pump start liquid level hₛₜₐᵣₜ is selected arbitrarily within an interval having predetermined limits. The interval is limited by and comprises a lower pump start liquid level h_{start,min} and an upper pump start liquid level h_{start,max}. The distance between the lower pump start liquid level h_{start,min} and the upper pump start liquid level h_{start,max} is preferably less than 1 m, more preferably less than 0,5 m. Preferably, the value of the pump start liquid level hₛₜₐᵣₜ is selected arbitrarily according to a uniform distribution, preferably according to a discrete uniform distribution, within said interval. The distance between the discrete values of pump start liquid level hₛₜₐᵣₜ is preferably greater than or equal to 1 cm and smaller than or equal to 10 cm, more preferably approximately equal to 5 cm.

According to the first embodiment of the sub method "Find start condition" shown in Figure 6, the sub method is terminated after that.

According to the second embodiment of the sub method "Find start condition" shown in Figure 7, a second sub method step "Run function: Determine t_{delay} " is carried out, which means determination of a value of the time delay t_{delay} that is a delay of the method 7 after the liquid level in the sump 3 reaches the pump start liquid level hₛₜₐᵣₜ, i.e., in practice it is a delay of the activation of the specific pump 2. The value of the time delay t_{delay} is selected arbitrarily within an interval having predetermined limits. The interval is limited by and comprises a lower limit t_{delay,min} and an upper limit t_{delay,max}. Preferably, the lower limit is equal to 0. The time lag between the lower limit t_{delay,min} and the upper limit t_{delay,max} is preferably less than 10 min, more preferably less than 5 min. Preferably, the value of the time delay t_{delay} is selected arbitrarily according to a uniform distribution, preferably according to a discrete uniform distribution, within said interval. The distance between the discrete values of the time delay t_{delay} is preferably greater than or equal to 10 s and smaller than or equal to 1 min, more preferably approximately equal to 0,5 min.

In an alternative embodiment, the upper limit t_{delay,max} of the time-delay may be equal to the lower limit t_{delay,min} of the same, wherein, in practice, the first embodiment of the sub method "Find start condition" is obtained.

### Feasible Modifications of the Invention

The invention is not limited only to the embodiments described above and shown in the drawings, which only have the purpose of illustrating and exemplifying. This patent application is intended to cover all adaptations and variants of the preferred embodiments described herein within the scope of the accompanying claims. Accordingly, the equipment can be modified in all feasible ways within the scope of the accompanying claims.

It should also be pointed out that all information about/regarding terms such as upper, under, etc., should be interpreted/read with the equipment orientated in accordance with the figures, with the drawings orientated in such a way that the reference designations can be read in a proper way. Accordingly, such terms only indicate mutual relationships in the shown embodiments, which relationships may be changed, within the scope of the claims, if the equipment according to the invention is provided with another construction/design.

It should be pointed out that even if it is not explicitly mentioned that features from one specific embodiment can be combined with the features of another embodiment, this should be regarded as evident when possible within the scope of the claims.

## Claims

1. Method for automatic mutual alternation between an arbitrary number of pumps arranged to pump liquid from a sump (3) of a pump station (1) by the control of each individual pump (2), without the need of neither direct nor indirect communication between pumps, which makes use of a start condition for a state change from an inactive state of the pump (2) into an active state of the pump (2) to be performed, as well as makes use of a stop condition for a state change from said active state into said inactive state to be performed, wherein the method (7) comprises a sub method that comprises the step of, after a predetermined stage, randomly changing the start condition of the individual pump within predetermined limits, **characterized in that** the step of randomly changing the start condition of the pump comprises the step of arbitrarily selecting a pump start liquid level hₛₜₐᵣₜ within an interval having predetermined limits.

2. Method according to claim 1, wherein the pump start liquid level hₛₜₐᵣₜ is arbitrarily changed within an interval, which is limited by and which comprises a lower pump start liquid level h_{start,min} and an upper pump start liquid level h_{start,max}.

3. Method according to claim 2, wherein the distance between the lower pump start liquid level h_{start,min} and the upper pump start liquid level h_{start,max} is smaller than 1 m, preferably smaller than 0,5 m.

4. Method according to any one of claims 1-3, wherein the pump start liquid level hₛₜₐᵣₜ is determined arbitrarily according to a discrete uniform distribution within said predetermined limits.

5. Method according to claim 4, wherein the distance between the discrete values of pump start liquid level hₛₜₐᵣₜ is greater than or equal to 1 cm and smaller than or equal to 10 cm.

6. Method according to any one of claims 1-5, wherein the step of randomly changing the start condition of the pump comprises the step of determining a time delay t_{delay} for the activation of the pump.

7. Method according to claim 6, wherein the start time delay t_{delay} is arbitrarily changed within an interval, which is limited by and which comprises a lower limit t_{delay,min} and an upper limit t_{delay,max}.

8. Method according to claim 7, wherein the time lag between the lower limit t_{delay,min} and the upper limit t_{delay,max} is less than 10 min, preferably less than 5 min.

9. Method according to any one of claims 6-8, wherein the time delay t_{delay} is determined arbitrarily according to a discrete uniform distribution, within said predetermined limits.

10. Method according to claim 9, wherein the distance between the discrete values of the time delay t_{delay} is greater than or equal to 10 s and smaller than or equal to 1 min.

## Patentansprüche

1. Verfahren zum automatischen wechselseitigen Umschalten zwischen einer beliebigen Anzahl von Pumpen, die dafür eingerichtet sind, eine Flüssigkeit von einem Sumpf (3) einer Pumpstation (1) durch Steuern jeder einzelnen Pumpe (2) abzupumpen, ohne dass eine direkte oder eine indirekte Kommunikation zwischen den Pumpen erforderlich ist, wobei eine Startbedingung zum Ausführen einer Zustandsänderung von einem inaktiven Zustand der Pumpe (2) in einen aktiven Zustand der Pumpe (2) genutzt wird, sowie eine Stoppbedingung zum Ausführen einer Zustandsänderung vom aktiven Zustand in den inaktiven Zustand genutzt wird, wobei das Verfahren (7) ein Unterverfahren aufweist, das den Schritt zum zufälligen Ändern des Startzustands der einzelnen Pumpe innerhalb vorgegebener Grenzen nach einer vorgegebenen Stufe aufweist;
**dadurch gekennzeichnet, dass**
der Schritt zum zufälligen Ändern der Startbedingung der Pumpe den Schritt zum beliebigen Auswählen eines Pumpenstartflüssigkeitspegels hₛₜₐᵣₜ innerhalb eines Intervalls mit vorgegebenen Grenzen aufweist.

2. Verfahren nach Anspruch 1, wobei der Pumpenstartflüssigkeitspegel hₛₜₐᵣₜ innerhalb eines Intervalls beliebig geändert wird, das einen unteren Pumpenstartflüssigkeitspegel h_{start,min} und einen oberen Pumpenstartflüssigkeitspegel h_{start,max} aufweist und dadurch begrenzt ist.

3. Verfahren nach Anspruch 2, wobei der Abstand zwischen dem unteren Pumpenstartflüssigkeitspegel h_{start,min} und dem oberen Pumpenstartflüssigkeitspegel h_{start,max} kleiner ist als 1 m, vorzugsweise kleiner als 0,5 m.

4. Verfahren nach einem der Ansprüche 1 bis 3, wobei der Pumpenstartflüssigkeitspegel hₛₜₐᵣₜ gemäß einer diskreten gleichmäßigen Verteilung innerhalb der vorgegebenen Grenzen beliebig festgelegt wird.

5. Verfahren nach Anspruch 4, wobei der Abstand zwischen den diskreten Werten des Pumpenstartflüssigkeitspegels hₛₜₐᵣₜ größer oder gleich 1 cm und kleiner oder gleich 10 cm ist.

6. Verfahren nach einem der Ansprüche 1 bis 5, wobei der Schritt des zufälligen Änderns der Startbedingung der Pumpe den Schritt des Bestimmens einer Zeitverzögerung t_{delay} für die Aktivierung der Pumpe aufweist.

7. Verfahren nach Anspruch 6, wobei die Startzeitverzögerung t_{delay} innerhalb eines Intervalls beliebig geändert wird, das eine untere Grenze t_{delay,min} und eine obere Grenze t_{delay,max} aufweist und dadurch begrenzt ist.

8. Verfahren nach Anspruch 7, wobei der zeitliche Abstand zwischen der unteren Grenze t_{delay,min} und der oberen Grenze t_{delay,max} weniger als 10 min, vorzugsweise weniger als 5 min beträgt.

9. Verfahren nach einem der Ansprüche 6 bis 8, wobei die Zeitverzögerung t_{delay} gemäß einer diskreten gleichförmigen Verteilung innerhalb der vorgegebenen Grenzen beliebig bestimmt wird.

10. Verfahren nach Anspruch 9, wobei der Abstand zwischen den diskreten Werten der Zeitverzögerung t_{delay} größer oder gleich 10 s und kleiner oder gleich 1 min ist.

## Revendications

1. Procédé d'alternance mutuelle automatique entre un nombre arbitraire de pompes agencées pour pomper un liquide d'un puisard (3) d'une station de pompage (1) par la commande de chaque pompe individuelle (2), sans avoir besoin ni de communication directe ni de communication indirecte entre les pompes, qui emploie une condition de départ pour un changement d'état d'un état inactif de la pompe (2) en un état actif de la pompe (2) à réaliser, et qui emploie également une condition d'arrêt pour un changement d'état dudit état actif en ledit état inactif à réaliser, dans lequel le procédé (7) comprend un sous-procédé qui comprend l'étape, après un stade prédéterminé, de changement de façon aléatoire de la condition de départ de la pompe individuelle dans des limites prédéterminées, **caractérisé en ce que** l'étape de changement de façon aléatoire de la condition de départ de la pompe comprend l'étape de sélection arbitraire d'un niveau de liquide de départ de pompe h_{départ} dans un intervalle ayant des limites prédéterminées.

2. Procédé selon la revendication 1, dans lequel le niveau de liquide de départ de pompe h_{départ} est changé arbitrairement dans un intervalle, qui est limité par et qui comprend un niveau de liquide de départ de pompe inférieur h_{départ,min} et un niveau de liquide de départ de pompe supérieur h_{départ,max}.

3. Procédé selon la revendication 2, dans lequel la distance entre le niveau de liquide de départ de pompe inférieur h_{départ,min} et le niveau de liquide de départ de pompe supérieur h_{départ,max} est inférieure à 1 m, de préférence inférieure à 0,5 m.

4. Procédé selon l'une quelconque des revendications 1 à 3, dans lequel le niveau de liquide de départ de pompe h_{départ} est déterminé arbitrairement selon une répartition uniforme discrète dans lesdites limites prédéterminées.

5. Procédé selon la revendication 4, dans lequel la distance entre les valeurs discrètes de niveau de liquide de départ de pompe h_{départ} est supérieure ou égale à 1 cm et inférieure ou égale à 10 cm.

6. Procédé selon l'une quelconque des revendications 1 à 5, dans lequel l'étape de changement de façon aléatoire de la condition de départ de la pompe comprend l'étape de détermination d'un retard de temps t_{retard} pour l'activation de la pompe.

7. Procédé selon la revendication 6, dans lequel le retard de temps de départ t_{retard} est changé arbitrairement dans un intervalle, qui est limité par et qui comprend une limite inférieure t_{retard,min} et une limite supérieure t_{retard,max}.

8. Procédé selon la revendication 7, dans lequel l'écart entre la limite inférieure t_{retard,min} et la limite supérieure t_{retard,max} est inférieure à 10 min, de préférence inférieure à 5 min.

9. Procédé selon l'une quelconque des revendications 6 à 8, dans lequel le retard de temps t_{retard} est déterminé arbitrairement selon une répartition uniforme discrète, dans lesdites limites prédéterminées.

10. Procédé selon la revendication 9, dans lequel la distance entre les valeurs discrètes du retard de temps t_{retard} est supérieure ou égale à 10 s et inférieure ou égale à 1 min.
